# EUROPEAN PATENT SPECIFICATION

(11) **EP 3 373 087 B1**
(45) Date of publication and mention of the grant of the patent: **25.09.2019**
(21) Application number: 18151072.8
(22) Date of filing: 10.01.2018
(51) Int. Cl.: G05B 19/05

(54) **CONTROL DEVICE AND PROGRAM**
STEUERUNGSVORRICHTUNG UND PROGRAMM
DISPOSITIF DE COMMANDE ET PROGRAMME

(30) Priority: 10.03.2017 JP 2017045781
(43) Date of publication of application: 12.09.2018
(73) Proprietor: OMRON CORPORATION, Kyoto-shi, Kyoto 600-8530 (JP)
(72) Inventor: EGUCHI, Shigeyuki, Kyoto-shi, Kyoto 600-8530 (JP); NISHIYAMA, Yoshihide, Kyoto-shi, Kyoto 600-8530 (JP); OTA, Masanori, Kyoto-shi, Kyoto 600-8530 (JP)
(74) Representative: 2K Patentanwälte Blasberg Kewitz & Reichel

(56) References cited:
- EP-A1- 2 767 906
- WO-A1-2014/090915
- WO-A1-2016/079771

## Description

### BACKGROUND

### Technical Field

The disclosure relates to a control device that includes a database in which data is stored in a time series and a program that implements the control device.

### Description of Related Art

Factory automation (FA) technology using a control device such as a programmable logic controller (PLC) has become widespread in various production fields. Data which is handled by such a control device needs to be interpreted later.

For example, Japanese Patent Application Laid-Open No. 2004-199670 (Patent Document 1) discloses a data collecting device that can collect data from a CPU of a PLC reliably and quickly. More specifically, Patent Document 1 discloses a data collecting device that is connected to a PLC bus of a PLC and collects IO data from a CPU thereof.

With advances in information and communication technology (ICT), a large amount of data can also be collected and stored by a control device. For example, Japanese Patent Application Laid-Open No. 2015-005062 (Patent Document 2) discloses a programmable logic controller in which a database is constructed on-memory on a nonvolatile memory which is a nonvolatile storage device without an upper limit of the number of times data can be written.
[Patent Document 1] Japanese Patent Application Laid-Open No. 2004-199670
[Patent Document 2] Japanese Patent Application Laid-Open No. 2015-005062
Further devices are known from EP 2 767 906 A1, WO 2016/079771 A1 and WO 2014/090915 A1.

### SUMMARY

In general, data collected in a database is used in later analysis, interpretation, or the like. Accordingly, the problem of the invention is to provide a mechanism for easily facilitating later analysis or interpretation, even when a configuration in which a large amount of data is collected in the database built in the above-mentioned control device is employed.

This problem is inventively solved by a control device according to claim 1 and a program executable on a control device according to claim 11. Advantageous embodiments are subject of the dependent claims.

According to first aspect of the invention, there is provided a control device including: a processing unit configured to cyclically perform a control operation with a predetermined execution cycle, wherein the control operation includes collection of input data from a field device, calculation of output data based on the input data in accordance with a predetermined user program, and output of the calculated output data, wherein the control device is a programmable logic controller; a database disposed in a storage of the control device and configured to store designated data from data managed by the processing unit in a time series; and a data writing means configured to perform writing of the designated data to the database at the same cycle as the execution cycle with which the control operation is cyclically performed, wherein the control operation which is cyclically performed by the processing unit includes a process of issuing a data writing request to the database, wherein, in the control operation, when the data writing request is issued by the processing unit, a next process is continuously performed by the processing unit without waiting for completion of the data writing.

According to an embodiment of the disclosure, the data writing means includes a buffer and the buffer is configured to receive the data writing request and to queue the data writing request.

According to an embodiment of the disclosure, a logical relationship between a data writing request source (Publisher) and a data receiving destination (Subscriber) is constructed in the data writing means.

According to an embodiment of the disclosure, the data writing means performs a process in the background in desynchronization with the control operation.

According to an embodiment of the disclosure, the control device is connected to a field device which is synchronized therewith, and time information on a time at which data is collected by the field device is added to the data stored in the database.

According to an embodiment of the disclosure, a key-value storage type record with the time information as a key and a value of the corresponding data as a value is stored in the database.

According to an embodiment of the disclosure, the control device integrates data which is stored in a database of each of one or more other control devices connected thereto.

According to an embodiment of the disclosure, the control device further includes a retrieval processing unit that processes a retrieval request for data stored in the database.

According to an embodiment of the disclosure, the control device further includes an arbitration processing unit that arbitrates in processing of the retrieval request such that the data writing to the database with the same cycle as the execution cycle is maintained.

According to an embodiment of the disclosure, a control system comprises the control device, an external device and another control device, wherein the control device is connected to the other control device including a database which is synchronized therewith, and the external device integrates data stored in the database of the control device and the database of the other control device.

According to second aspect of the invention, there is provided a program executable on a control device, the program causing the control device to perform a step of cyclically performing a control operation with a predetermined execution cycle, wherein the control operation includes collection of input data from a field device, calculation of output data based on the input data in accordance with a predetermined user program, and output of the calculated output data, wherein the control device is a programmable logic controller. The control device includes a database disposed in a storage of the control device and configured to store designated data from data managed by the control operation in a time series. The program causes the control device to further perform a step of performing writing of the designated data to the database at the same cycle as the execution cycle with which the control operation is cyclically performed wherein the control operation which is cyclically performed by the processing unit includes a process of issuing a data writing request to the database, wherein, in the control operation, when the data writing request is issued by the processing unit, a next process is continuously performed by the processing unit without waiting for completion of the data writing.

According to the disclosure, it is possible to maintain cyclic execution of a control operation and to store data according to an execution cycle of the control operation.

### BRIEF DESCRIPTION OF THE DRAWINGS

FIG. 1 is a diagram schematically illustrating an example of an entire configuration of a control system according to an embodiment of the disclosure.
FIG. 2 is a block diagram illustrating an example of a hardware configuration of a control device constituting the control system according to the embodiment.
FIG. 3 is a block diagram illustrating an example of a software configuration of the control device constituting the control system according to the embodiment.
FIG. 4 is a diagram schematically illustrating a data structure of a time-series database which is mounted in the control device according to the embodiment.
FIG. 5 is a diagram schematically illustrating a cyclic execution process and a writing process to the time-series database in the control device according to the embodiment.
FIG. 6(A) and 6(B) are block diagrams illustrating a mounting example in which an application is associated with the time-series database of the control device according to the embodiment.
FIG. 7 is a block diagram illustrating a function associated with access to the time-series database of the control device according to the embodiment.
FIG. 8 is a diagram schematically illustrating an example of a configuration in which the control device according to the embodiment collects data from a field device group.
FIG. 9 is a diagram schematically illustrating a time-series data collecting process in the control device according to the embodiment.
FIG. 10 is a diagram schematically illustrating a time-series data integrating process in the control device according to the embodiment.
FIG. 11 is a diagram schematically illustrating a time-series data integrating process in an external device which is connected to the control device according to the embodiment.

### DESCRIPTION OF THE EMBODIMENTS

An embodiment of the disclosure will be described below in detail with reference to the accompanying drawings. The same or corresponding elements in the drawings will be referenced by the same reference signs and description thereof will not be repeated.

### A. Example of entire configuration of control system

First, an example of an entire configuration of a control system 1 including a control device according to an embodiment of the disclosure will be described.

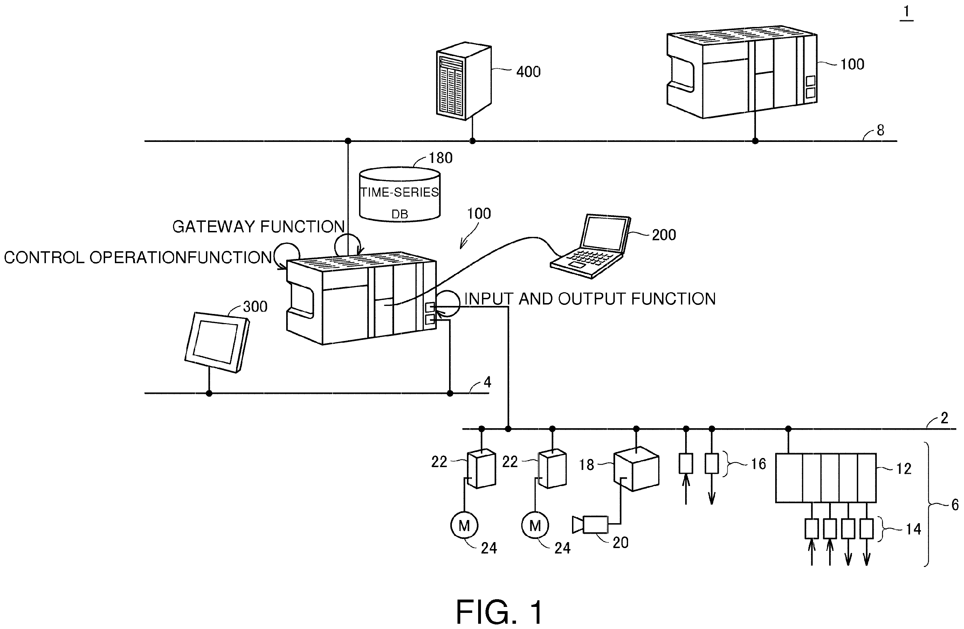

FIG. 1 is a diagram schematically illustrating an example of the entire configuration of the control system 1 according to the embodiment. Referring to FIG. 1, the control system 1 according to the embodiment includes a control device 100 that controls a control object and a support device 200 that is connected to the control device 100 as main elements.

The control device 100 is embodied as a programmable logic controller (PLC). The control device 100 is connected to a field device group 6 via a first field bus 2 and is connected to one or more display devices 300 via a second field bus 4. The control device 100 transmits and receives data to and from the connected devices via buses or networks.

The control device 100 has a control operation function of executing various operations for controlling production equipment or facilities. In addition to the control operation function, the control device 100 has an input and output function of acquiring data, which is measured by the field device group 6 and is transmitted to the control device 100 (hereinafter, also referred to as "input data") or various types of data calculated by the control operation function, and a time-series database 180. In the following description, a "database" is also referred to as a "DB." The time-series database 180 stores various types of data which are acquired by the input and output function in a time series as will be described later.

The first field bus 2 and the second field bus 4 may be employed as buses or networks that enable fixed-cycle communication in which an arrival time of data is guaranteed. As such a bus or network that enables fixed-cycle communication, EtherCAT (registered trademark), EtherNet/IP (registered trademark), DeviceNet (registered trademark), CompoNet (registered trademark), and the like are known.

The field device group 6 includes devices that collect input data from a control object or a manufacturing line and a production line (hereinafter generically referred to as a "field") associated with control. Examples of such devices that collect input data include an input relay and various sensors (for example, an analog sensor, a temperature sensor, and a vibration sensor). The field device group 6 includes devices that apply a certain action to the field on the basis of a command (hereinafter also referred to as "output data") generated from the control device 100. Examples of such devices that apply a certain action to the field include an output relay, a contactor, a servo driver, a servo motor, and arbitrary actuators.

In this way, a control operation function of the control device 100 acquires input data from a control object and determines output data for the control object by performing a control operation based on the acquired input data.

The field device group 6 transmits and receives data including input data and output data to and from the control device 100 via the first field bus 2. In the example of the configuration illustrated in FIG. 1, the field device group 6 includes a remote I/O (Input/Output) device 12, a relay group 14, an image sensor 18, a camera 20, a servo driver 22, and a servo motor 24. The field device group 6 is not limited thereto and any device that can collect input data or perform an action based on output data can be employed.

The remote I/O device 12 includes a communication unit that performs communication via the first field bus 2 and an input/output unit (hereinafter, also referred to as an "I/O unit") that acquires input data and outputs output data. Input data and output data are transmitted and received between the control device 100 and the field via such an I/O unit. FIG. 1 illustrates an example in which digital signals are transmitted and received as input data and output data via the relay group 14.

The I/O unit may be connected directly to the field bus or field network. FIG. 1 illustrates an example in which the I/O unit 16 is connected directly to the first field bus 2.

The image sensor 18 performs an image measuring process such as pattern matching on image data imaged by the camera 20 and transmits the process result to the control device 100.

The servo driver 22 drives the servo motor 24 in accordance with output data (for example, a position command or a speed command) from the control device 100.

As described above, the control device 10 and the field device group 6 transmit and receive data to and from each other via the first field bus 2, and the transmitted and received data is updated at a very short cycle of several hundreds of usec to several tens of msec. The process of updating the transmitted and received data may be referred to as an "I/O refreshing process."

The display device 300 that is connected to the control device 100 via the second field bus 4 is operated by a user, outputs a command or the like in response to the user's operation to the control device 100, and graphically displays a calculation result in the control device 100.

The support device 200 is a device that supports preparation required for the control device 100 to control a control object. Specifically, the support device 200 provides a development environment of a program (such as a program preparing and editing tool, a parser, and a compiler) which is executed in the control device 100, a setting environment for setting parameters (configurations) for the control device 100 and various devices connected to the control device 100, a function of outputting a generated user program to the control device 100, and a function of on-line correcting and modifying a user program or the like which is executed in the control device 100.

The control device 100 also has a gateway function of outputting data acquired by the input and output function and/or data stored in the time-series database 180 to an external device.

A host system 400 such as a manufacturing execution system which is connected to the control device 100 via a host-controller communication network 8 is illustrated as a typical example of the external device in FIG. 1. The manufacturing execution system serves to acquire information from a manufacturing device or equipment that is a control object and to monitor and manage the whole production, and may handle order information, quality information, shipment information, and the like.

### B. Example of hardware configuration of control device

An example of a hardware configuration of the control device 100 constituting the control system 1 according to the embodiment will be described below.

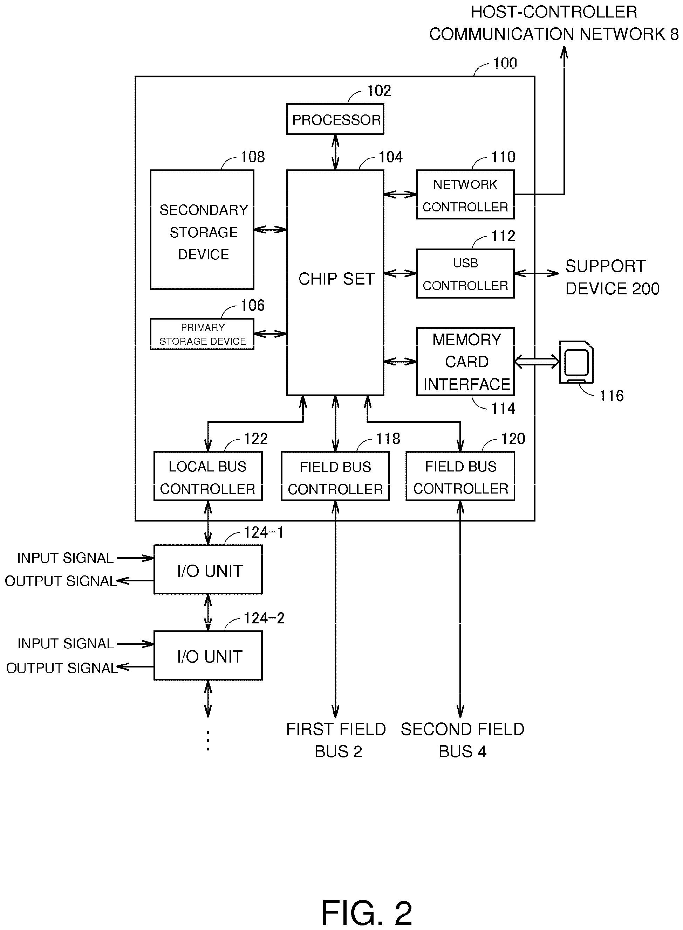

FIG. 2 is a block diagram illustrating an example of a hardware configuration of the control device 100 constituting the control system 1 according to the embodiment. Referring to FIG. 2, the control device 100 includes an operation processing unit and one or more I/O units 124-1, 124-2, ....

The control device 100 includes a processor 102, a chip set 104, a primary storage device 106, a secondary storage device 108, a network controller 110, a Universal Serial Bus (USB) controller 112, a memory card interface 114, a local bus controller 122, and field bus controllers 118 and 120.

The processor 102 includes a central processing unit (CPU) or a micro-processing unit (MPU), and implements control for each control object and various processes which will be described later by reading various programs stored in the secondary storage device 108 and loading and executing the read program in the primary storage device 106. The chip set 104 implements overall processes of the control device 100 by controlling the devices with the processor 102.

In addition to a system program for implementing basic functions, a user program which is prepared for each manufacturing device or equipment that is a control object is stored in the secondary storage device 108. The time-series database 180 which will be described later is constituted by the secondary storage device 108 or the like.

The network controller 110 transmits and receives data to and from the host system 400 (see FIG. 1) via the host-controller communication network 8. The USB controller 112 controls data transmission between the support device 200 via USB connection.

The memory card interface 114 is configured to enable a memory card 116 to be detachably attached thereto, and is configured to be able to write data to the memory card 116 and to read various data from the memory card 116. The time-series database 180 which will be described later may be configured using the memory card 116.

The local bus controller 122 is an interface that transmits and receives data to and from the I/O units 124-1, 124-2, ... which are mounted in the control device 100.

The field bus controller 118 controls transmission and reception of data to and from the field device group 6 or the like via the first field bus 2. Similarly, the field bus controller 120 controls transmission and reception of data to and from the display device 300 or the like via the second field bus 4.

FIG. 2 illustrates an example in which necessary functions are provided by causing the processor 102 to execute a program, but some or all of the functions to be provided may be implemented by using a dedicated hardware circuit (for example, an application specification integrated circuit (ASIC) or a field-programmable gate array (FPGA)). Alternatively, principal parts of the control device 100 may be implemented using hardware based on a general-purpose architecture (for example, an industrial PC based on a general-purpose PC). In this case, using virtualization technology, a plurality of operating systems (OSs) having different purposes may be executed in parallel and necessary applications may be executed on the OSs.

### C. Example of software configuration of control device

An example of a software configuration of the control device 100 constituting the control system 1 according to the embodiment will be described below.

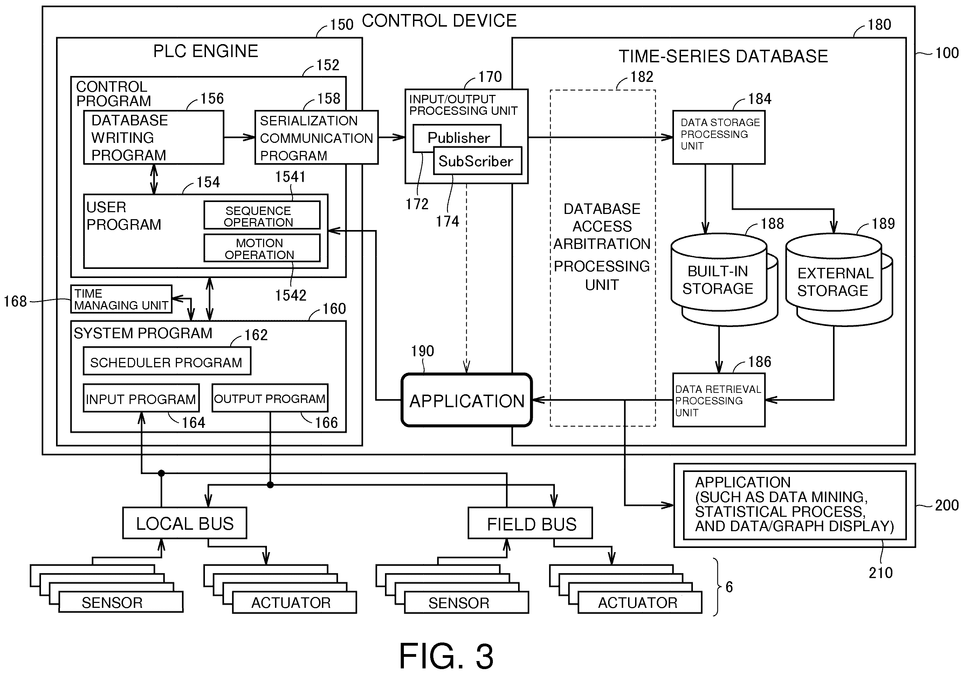

FIG. 3 is a block diagram illustrating an example of the software configuration of the control device 100 constituting the control system 1 according to the embodiment. Referring to FIG. 3, the control device 100 includes a PLC engine 150, an input/output processing unit 170, a time-series database 180, and an application 190.

Typically, the PLC engine 150 corresponds to a processing unit that can execute various programs under an execution environment when the processor 102 of the control device 100 executes a system program to provide the execution environment for various programs. More specifically, the PLC engine 150 includes a control program 152, a system program 160, and a time managing unit 168.

The control program 152 is a program for providing various applications depending on control objects, and typically includes a user program 154, a database writing program 156, and a serialization communication program 158.

The user program 154 corresponds to a main part that provides a control operation function and can be arbitrarily configured depending on manufacturing devices or equipment that is a control object of the control device 100. The user program 154 can be defined by ladder logic using function blocks or the like. In the example illustrated in FIG. 3, the user program 154 includes a sequence operation 1541 and a motion operation 1542. In the motion operation 1542, an output value to an actuator is created with reference to input data from a sensor or an actuator and a command included in the user program 154.

In this way, the user program 154 updates a state value in the control device 100 as an output with reference to the state value in the control device 100 including a measured value which is updated by the input program 164. The updated state value may be referred to by another function such as the output program 166 or the database writing program 156 which is executed in the control device 100. In general, the user program 154 is generated using a programming tool by a user (such as a device developer) of the control device 100.

The database writing program 156 is called by a command defined in the user program 154, and writes designated data to the time-series database 180 via the input/output processing unit 170. The database writing program 156 may be executed as a high-priority program.

More specifically, the database writing program 156 collects data and requests to store the data in the time-series database 180. The database writing program 156 can be executed in synchronization with the user program 154. The database writing program 156 can add time information which is synchronized between devices by the time managing unit 168 to the data. A specific example of the time information is a time at which a sensor that is an input source of data inputs data. The database writing program 156 may additionally have various functions of processing collected data such as unit conversion and extracting information from a plurality of pieces of data. The database writing program 156 can request to store data that is a processing object in the time-series database 180 similarly to the collected data. The database writing program 156 can be created using the same tool as the user program 154. Alternatively, the database writing program 156 may be created as a part of the user program 154. The database writing program 156 may be created to be independent of the user program 154 using another tool.

The serialization communication program 158 performs a serialization process on data which is written to the time-series database 180 from the database writing program 156. More specifically, the serialization communication program 158 performs a process (serialization) of converting time-series data into a byte string which can be stored. The serialization communication program 158 converts a data group of which storage is requested to the time-series database 180 by the database writing program 156 into a format suitable for storage and reference in the database. The serialization process does not need to be performed depending on a data writing speed to the time-series database 180, a data capacity thereof, or the like. That is, the serialization communication program 158 is an optional element.

The system program 160 includes a scheduler program 162, an input program 164, and an output program 166.

The scheduler program 162 performs scheduling of programs which are executed by the control device 100 on the basis of execution conditions. That is, the scheduler program 162 manages an execution order or an execution time of one or more tasks or processes constituting the control program 152. The input program 164 provides a function of acquiring input data (for example, a sensor-measured value or a device state value) from various devices (the field device group 6) which are connected to the control device 100 via a local bus or a field bus. The output program 166 outputs a command value (output data) which is calculated by the user program 154 executed by the control device 100 to a target device (the field device group 6) connected thereto via a local bus or a field bus.

The time managing unit 168 is an entity that manages a synchronization time in the control device 100 and is implemented, for example, using a counter or a timer which counts up/down at predetermined intervals. The time managing unit 168 may have a function for synchronization with another counter or timer. In this case, the time managing unit may be synchronized with a counter or timer located on a device over a local bus, a field bus, or a field network. The time managing unit 168 shares time with a device connected to another network in addition to the device over the local bus, the field bus, or the field network with high accuracy (for example, order of micro seconds). This time serves as a reference for an input/output execution time of a sensor/actuator or a program execution time in the control device 100.

The input/output processing unit 170 processes a data writing request to the time-series database 180 from the PLC engine 150. More specifically, a logical relationship between a data writing request source (Publisher) 172 and a data receiving destination (Subscriber) 174 is constructed in the input/output processing unit 170. Such a logical relationship is arbitrarily designed depending on various requests, and thus an on-the-fly input/output process is implemented. By using this configuration, the input/output processing unit 170 writes time-series data to the time-series database 180 on the fly.

In this way, the input/output processing unit 170 receives and accumulates a data writing request to the time-series database 180 from the database writing program 156 and sequentially stores to the time-series database 180. The input/output processing unit 170 operates without affecting processes with a control cycle which are performed by the system program 160 and the control program 152. The data writing request source (Publisher) 172 which is a supply source of a plurality of pieces of data and the data receiving destination t (Subscriber) 174 which is a subscriber can be present and can be arbitrarily correlated with each other. In an example of such a control cycle, the database writing program 156 may be executed for each control cycle to sequentially store time-series data in the time-series database 180. It is possible to smoothly cope with supply of data to another database or application or reception of an input from an application other than the control program. Detailed processes of the input/output processing unit 170 will be described later.

The time-series database 180 is typically disposed in the primary storage device 106 or the secondary storage device 108 (see FIG. 2) and has a function of storing time-series data and a retrieval function of returning designated time-series data in response to a request (a query) from the outside. The time-series database 180 stores time-series data which is written by the database writing program 156.

More specifically, the time-series database 180 includes a database access arbitration processing unit 182, a data storage processing unit 184, a data retrieval processing unit 186, a built-in storage 188, and an external storage 189.

The database access arbitration processing unit 182 arbitrates in processing a retrieval request such that the data writing to the time-series database 180 is maintained at the same cycle as the execution cycle (the system cycle) of the control operation. More specifically, when a data writing request to the database and a retrieval request for the database collide, the database access arbitration processing unit 182 adjusts times of the requests and the like. The database access arbitration processing unit 182 adjusts the execution order of the time-series data storage requests to the time-series database 180 and the retrieval requests. Particularly, when data is frequently stored with a fixed cycle, it is possible to avoid a situation in which the storage cannot cope with concentration of other database access requests and data is lost. Detailed processes of the database access arbitration processing unit 182 will be described later.

The data storage processing unit 184 adds input time-series data to a designated record of the built-in storage 188 or the external storage 189 in response to a data writing request to the database via the input/output processing unit 170. The data storage processing unit 184 may appropriately use a plurality of storages as a storage destination of the time-series data. The data storage processing unit 184 may set a ring operation of maintaining an amount of data (an occupied storage capacity) in the database to be equal to or less than a predetermined amount by erasing old data. The data storage processing unit 184 can perform writing to a database without damaging the database when the control device 100 is turned off.

The built-in storage 188 is a data storage unit using the secondary storage device 108 (FIG. 2) or the like which is built in the control device 100. The built-in storage 188 can include a nonvolatile memory such as a flash memory in addition to a volatile memory such as a dynamic random access memory (DRAM) or a static random access memory (SRAM). The external storage 189 is a nonvolatile data storage unit using the memory card 116 (FIG. 2) or an external hard disc which is not illustrated.

The data retrieval processing unit 186 provides a function of processing a retrieval request for data stored in the time-series database 180 and retrieves time-series data satisfying designated conditions from the built-in storage 188 and/or the external storage 189 in response to a retrieval request from the application 190 and/or an application 210 or the like which is executed in the support device 200. That is, the data retrieval processing unit 186 retrieves time-series data stored in the storage in response to a request from an application inside or outside the control device 100 and sends the acquired data to a request source.

The application 190 is an arbitrary program which is executed in the control device 100, and is typically a program using time-series data stored in the time-series database 180 is exemplified. For example, an application that performs machine learning using the time-series data stored in the time-series database 180 as learning data and performs certain determination is exemplified.

The application 190 is a program which is started regardless of a control cycle and corresponds to an application that operates with a frequency or time other than control which is performed by the system program 160 or the control program 152. The application 190 operates with a schedule which does not interfere with execution of the control program 152 and interacts with elements in the control program 152 or the system other than the control device 100 depending on its purpose. Examples of the application 190 include an artificial intelligence (AI) function or the like, which retrieves time-series data from the time-series database 180 and performs diagnosis of the system or feedback to the control based on data of a plurality of cycles.

In the support device 200 connected to the control device 100, an arbitrary application 210 may be executed. A program using time-series data stored in the time-series database 180 is exemplified as the application 210. For example, a so-called data mining tool of interpreting time-series data stored in the time-series database 180 of the control device 100 and finding a certain tendency or a feature quantity associated with the tendency is exemplified. Alternatively, an application that performs various statistical processes on time-series data stored in the time-series database 180 or an application that displays numerical values of time-series data stored in the time-series database 180 or displays a graph visually representing the time-series data is exemplified.

### D. Time-series database

A data structure of the time-series database 180 which is mounted in the control device 100 according to the embodiment will be described below.

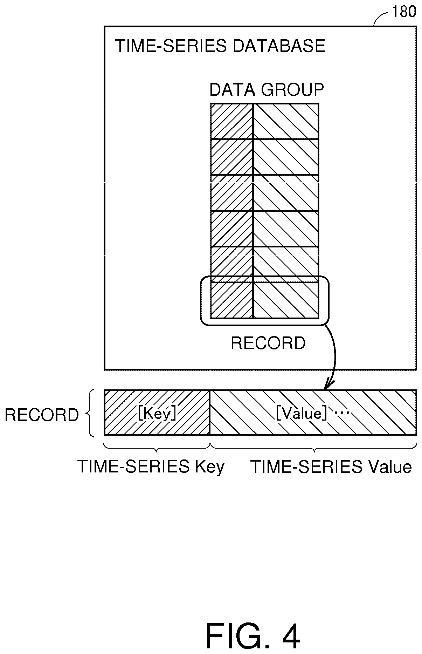

FIG. 4 is a diagram schematically illustrating a data structure of the time-series database 180 which is mounted in the control device 100 according to the embodiment. Referring to FIG. 4, the concept of time-series data which is handled by the time-series database 180 is also referred to as a "time series." One time series may include a plurality of levels of databases.

In the time-series database 180, a plurality of time series may be created, or a time series may be created, for example, for each application. Database files may have independent attributes such as versions.

A data group is stored in the time-series database 180. A data group may include time-series data which is stored in the units of records which are minimum units of data. Each record may employ a Key-Value storage type. When a Key-Value storage type record is employed, data to be stored (Value) and a unique index (Key) corresponding to the data are stored in correlation with each other. That is, each record includes a key and a value of the Key-Value storage type.

More specifically, each record includes a time-series key indicating an index of time-series data and a time-series value indicating a value of the time-series data. The time-series key may record, for example, time information or information indicating a time. The time-series value may record values (actual values) of corresponding input data, output data, or operation data.

### E. Time-series data storing process

A time-series data storing process in the control device 100 according to the embodiment will be described below. In the control device 100, an I/O refreshing process is repeated performed with a predetermined cycle. At least part of the user program 154 is executed with the same cycle as the I/O refreshing process. In this embodiment, writing of time-series data to the time-series database 180 is performed by the database writing program 156, and the database writing program 156 is called by the user program 154.

In the control device 100 according to the embodiment, by the on-the-fly input and output process which is provided by the input/output processing unit 170, the writing of time-series data to the time-series database is implemented without interfering with repeated execution (cyclic execution) of a series of programs including the I/O refreshing process.

The time-series database 180 may enable storage and retrieval of a plurality of pieces of time-series data which are independent each other. One or more storages may be used depending on the size of the time-series database 180. In addition to a function of storing continuous normal time-series data, a ring function of limiting an occupied storage capacity to a predetermined amount by erasing past time-series data may be attached to the time-series database 180.

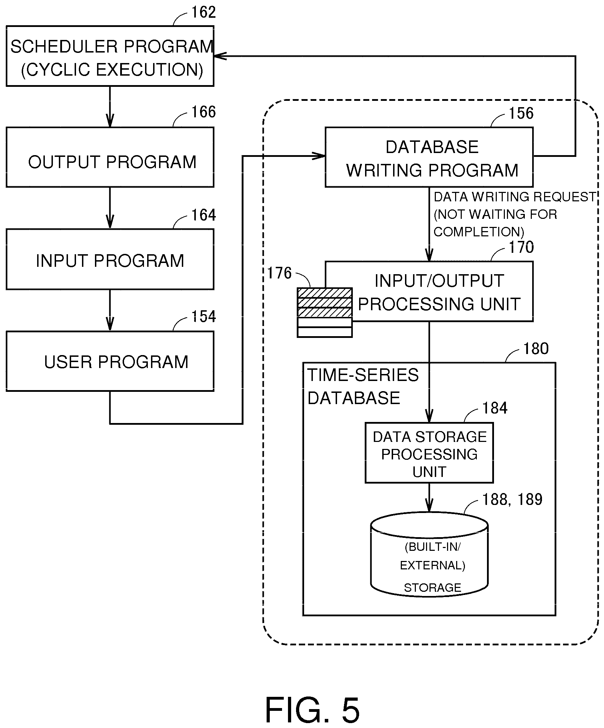

FIG. 5 is a diagram schematically illustrating a cyclic execution process and a writing process to the time-series database in the control device 100 according to the embodiment. FIG. 5 illustrates an example in which the output program 166, the input program 164, the user program 154, and the database writing program 156 which is called by the user program 154 are cyclically executed. The execution cycle of the cyclic execution (an interval between execution start times) illustrated in FIG. 5 may be referred to as a "control cycle."

The control operation which is cyclically performed with a predetermined execution cycle as illustrated in FIG. 5 includes collection of input data from a field device (the input program 164), calculation of output data based on the input data in accordance with a predetermined user program 154, and output of the calculated output data (the output program 166).

As illustrated in FIG. 5, when the database writing program 156 is called by the user program 154, the database writing program 156 is executed in synchronization with the control cycle.

The cyclic execution is managed by the scheduler program 162. Only an example of the cyclic execution is illustrated in FIG. 5, and a program to be executed is not limited to the programs illustrated in FIG. 5, but another program may be cyclically executed or some programs illustrated in FIG. 5 may be omitted.

The database writing program 156 integrates predetermined data among input values acquired by the input program 164, internal state values indicating an internal state of the control program 152 or the control device 100, and output values output from the output program 166 and issues a data writing request to the time-series database 180. The data writing request is sent to the input/output processing unit 170. That is, the control operation which is cyclically performed includes a process of issuing the data writing request to the time-series database 180.

The time-series database 180 stores designated data among data which is managed by the PLC engine 150 (the processing unit) in a time series. The input/output processing unit 170 corresponds to a data writing means that performs data writing to the time-series database 180 with the same cycle as the execution cycle with which the control operation is cyclically performed.

More specifically, the input/output processing unit 170 processes the data writing request from the database writing program 156 on the fly. Accordingly, the database writing program 156 does not need to wait for completion of storage of data in the time-series database 180 by the input/output processing unit 170. That is, when the database writing program 156 issues the data writing request, processing thereof can be completed and the cyclic execution illustrated in FIG. 5 with a predetermined control cycle can be guaranteed. That is, when the database writing program 156 is executed in synchronization with the control cycle, the database writing program 156 can request storage of new time-series data even if storage of time-series data in the time-series database 180 which has been requested in the previous control cycle is not completed.

In this way, in the control device 100 according to the embodiment, the database writing program 156 operates without waiting for completion of storage of time-series data in the time-series database 180.

Data to be stored in the time-series database 180 and acquired values may be subjected to a preliminary processing process such as scaling or a statistical process to reduce an amount of information.

The database writing program 156 itself may be created using the same programming tool as creating the user program 154. At this time, the database writing program 156 may be configured as a part of the user program 154 or may be configured as a program independent from the user program 154. A plurality of database writing programs 156 may be executed by the same processor 102.

Even when the control program 152 is being executed (cyclically executed) in the control device 100, an editing operation (addition or deletion of a target variable) may be performed on the database writing program 156.

A description pattern or a description format of the database writing program 156 is not limited to codes in which a series of command are described, but a dedicated tool or a dedicated application that designates necessary information (for example, a list of variables to be collected or a list of operations of modifying the variables) may be provided. In order to implement such a dedicated tool or such a dedicated application, an interface that receives various settings may be provided on the control device 100 side or the support device 200 side.

Instead of an explicit database writing program 156, the database writing program 156 may be implemented as a part of a system task which is performed in the control device 100.

The input/output processing unit 170 stores designated time-series data in the time-series database 180 in response to the data writing request from the database writing program 156. As described above, from the viewpoint of the database writing program 156, after the data writing request has been issued, the input/output processing unit 170 processes the data writing request without waiting for completion of storage of time-series data. The storage of time-series data by the input/output processing unit 170 is performed in the background in desynchronization with the control operation which is performed in a control cycle. An influence on the control cycle can be reduced by such desynchronization or execution in the background.

When a configuration of a multi-core or a multi-processor is employed as the processor 102, a core or processor that takes charge of a process of implementing the input/output processing unit 170 may be assigned separately from the core or processor which cyclically performs the control operation.

As an example of an implementation form for storing data in desynchronization with the control cycle, the input/output processing unit 170 may include a buffer 176 that queues a writing request. That is, the input/output processing unit 170 may include a buffer 176 that receives a data writing request and queues the data writing request. Alternatively, a buffer having the same function may be provided in the data storage processing unit 184 of the time-series database 180. Alternatively, a configuration in which buffers are provided in the input/output processing unit 170 and the data storage processing unit 184 may be employed.

By employing such a configuration, when a data writing request is issued in the control operation, a next process is continuously performed without waiting for completion of the data writing.

In the input/output processing unit 170, a relationship between the data writing request source (Publisher) 172 and the data receiving destination (Subscriber) 174 (see FIG. 3) can be arbitrarily constructed. That is, what entity (program or module) takes charge of issuing a data writing request or what entity (a program or module) takes charge of writing time-series data to the time-series database 180 in response to the data writing request can be arbitrarily designed depending on an environment of a mounted system, the request, or the like.

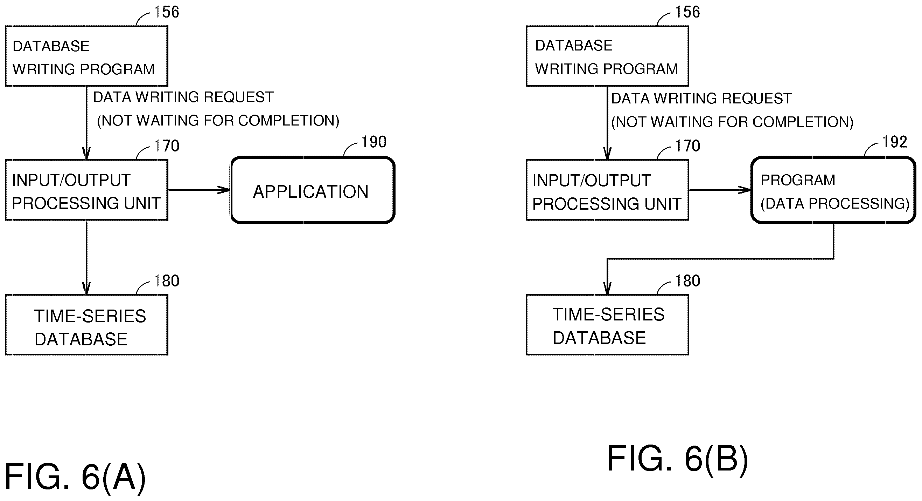

FIG. 6(A) and 6(B) are a block diagrams illustrating a mounting example in which an application is associated with the time-series database 180 of the control device 100 according to the embodiment. FIG. 6(A) illustrates an example of a configuration in which time-series data is sent to the application, and FIG. 6(B) illustrates an example of a configuration in which time series data is preliminarily processed.

By appropriately constructing the relationship between the data writing request source 172 and the data receiving destination 174 in the input/output processing unit 170, for example, time-series data stored in the time-series database 180 may be simultaneously sent to one or more applications 190. In the example illustrated in FIG. 6(A), when a certain data writing request is received, the input/output processing unit 170 can store target time-series data in the time-series database 180 and send the time-series data to the application 190. An application that performs a process of detecting an abnormality sign on the basis of time-series data collected from the field devices is exemplified as the application 190. As a result, it is possible to easily construct an application that can interpret a time-series data group while maintaining high real-time characteristics and can feed back the interpretation result to control.

When time-series data is stored in the time-series database 180, an arbitrary processing process such as scaling or a statistical process may be performed. In the example illustrated in FIG. 6(B), it is assumed that the program 192 for performing the arbitrary processing process such as scaling or a statistical process is executed in the control device 100. When a certain data writing request is received, the input/output processing unit 170 sends target time-series data to the program 192. The program 192 performs a predetermined data processing process on the time-series data and stores the processing result in the time-series database 180. At this time, when a process time of the data processing process using the program 192 has fluctuation or the like, a rate by which the time-series data is sent from the input/output processing unit 170 to the program 192 may be adjusted to absorb the fluctuation.

When a plurality of database writing programs 156 and a plurality of databases are provided, a plurality of input/output processing units 170 may be provided. In this configuration, the function of the input/output processing unit 170 or the buffer 176 in the input/output processing unit 170 may be divided for each purpose or for each database.

As described above, in the control device 100 according to the embodiment, since data writing to the time-series database 180 can be performed on the fly, execution in the control cycle of the control program can be guaranteed.

### F. Time-series data retrieving process

The control device 100 according to the embodiment can perform a process of retrieving time-series data stored in the time-series database 180. In the time-series database 180, a key-value storage type record may be typically employed, and each record corresponds to each piece of time-series data. In this case, arbitrary information included in the key of each record can be designated as a retrieval key.

Typically, the key of each record may include time information (time stamp). Such time information may be included in a part of input information acquired from the field device group 6 or may be provided from the time managing unit 168 (FIG. 3). For example, time information on the time at which input data is acquired from the field device group 6 may be stored. Such a retrieval process is performed by the data retrieval processing unit 186 (FIG. 3).

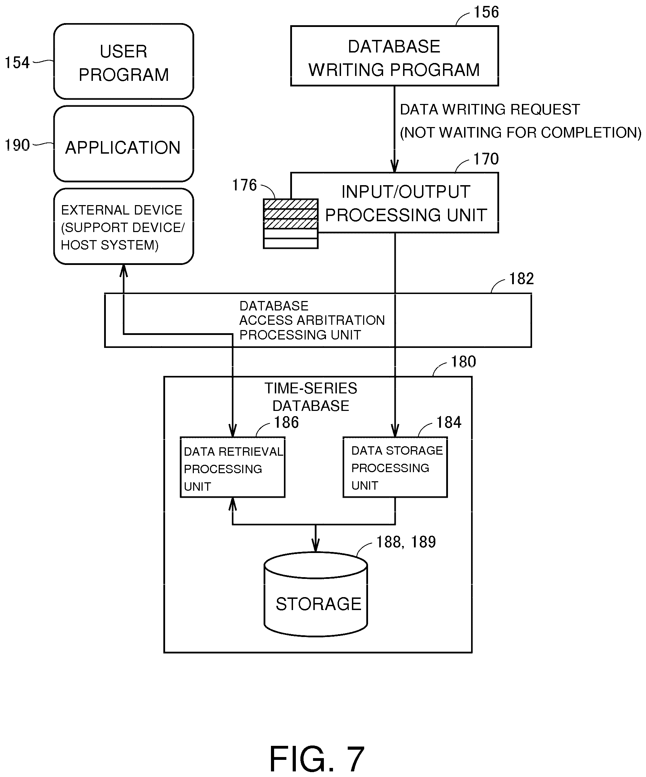

FIG. 7 is a block diagram illustrating a function associated with access to the time-series database 180 of the control device 100 according to the embodiment. Referring to FIG. 7, when a retrieval request including retrieval conditions such as a certain retrieval key is received, the data retrieval processing unit 186 retrieves and extracts a record satisfying the retrieval conditions. The data retrieval processing unit 186 can receive a retrieval request from an arbitrary entity regardless of whether the entity is located inside or outside the control device 100. Examples of the entity that issues a retrieval request include the user program 154, an arbitrary application 190 (for example, a statistic program or an AI program) which is executed in the control device 100, and an external device such as the support device 200 or the host system 400.

By employing the above-mentioned configuration, time-series data is stored for each control cycle in the time-series database 180, and retrieval requests from a plurality of entities are issued at arbitrary times. That is, a data writing request and a retrieval request may be simultaneously issued to the time-series database 180. In order to appropriately solve such a collision state, the database access arbitration processing unit 182 arbitrates in the requests.

The database access arbitration processing unit 182 adjusts an issuance order or issuance times of the processing requests to the time-series database 180 such that it can respond to data writing requests of a set scale or constant data writing requests of a scale which is recognized from an operating state without omission.

Examples of the arbitration process in the database access arbitration processing unit 182 are as follows.
(1) Insert (an addition command) of X records (or Y bytes) is preferentially processed per unit period (for example, 1 second).
(2) When a plurality of time-series data writing requests are received, database writing programs having issued the writing requests may be identified, a process up to X records/sec may be allocated to a first database writing program, and a process up to Y records/sec may be allocated to a second database writing program. That is, an amount of data which can be preferentially processed may be set in advance for each database writing program and the process may be preferentially performed within the set range.
(3) In order to avoid a situation in which sufficient resources cannot be allocated to another database access due to load saturation resulting from a process associated with data writing, a minimum frame(resources) dedicated for a retrieval request may be secured.
(4) Arbitration may be performed on reading accesses to the time-series database 180. For example, a retrieval request from an application that periodically collects data from the time-series database 180 and feeds back the collected data to the control operation process may be processed prior to an asynchronous query. In this case, an amount of requests per unit time which is preferentially processed among the retrieval requests in the application and the like be limited.

By employing the database access arbitration processing unit 182, the function of storing time-series data in the time-series database 180 in synchronization with the control cycle can be further reinforced. That is, even in a situation in which asynchronous processes or retrieval processes with unstable loads should be performed in parallel, it is possible to implement periodic storage of time-series data.

When a plurality of applications that issue a data writing request are present, a plurality of input/output processing units 170 that processes the data writing requests may be provided. In this case, resources can be allocated to the input/output processing units 170 by arbitration.

### G. Time-series data collecting process

In the control device 100 according to the embodiment, common time can be given to data which are collected from the field device group 6.

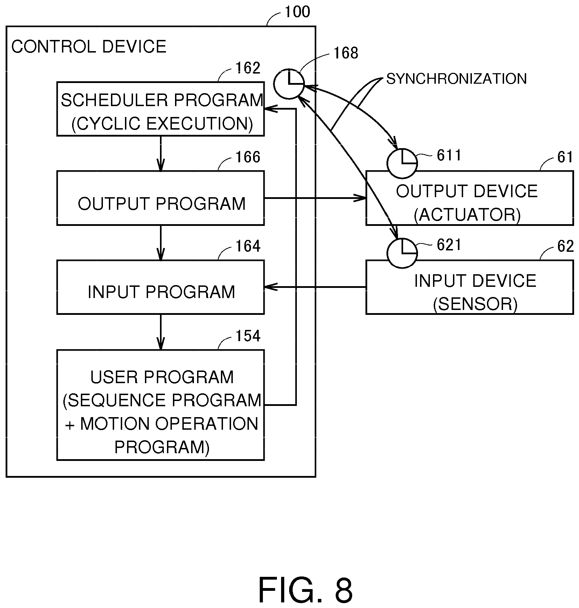

FIG. 8 is a diagram schematically illustrating an example of a configuration in which the control device 100 according to the embodiment collects data from the field device group 6. Referring to FIG. 8, in the control device 100, the output program 166, the input program 164, and the user program 154 (which can include a database writing program which is not illustrated) are cyclically executed under the control of an execution time by the scheduler program 162.

The control device 100 is connected to the field device group 6 (for example, an output device 61 such as an actuator and an input device 62 such as a sensor) via a local bus, a field bus, a field network, or the like. The control device 100 and the field device group 6 connected thereto via the local bus, the field bus, the field network, or the like include timers synchronized with each other or the like to realize a synchronous communication process. That is, the time managing unit 168 of the control device 100 is synchronized with a time managing unit 611 of the output device 61 and/or a time managing unit 621 of the input device 62.

Accordingly, by adding time information which are managed by the time managing units 611 and 621 of the devices to data which are transmitted from the output device 61 and the input device 62 to the control device 100 and transmitting the resultant data, it is possible to match times with data which is handled by the output program 166 and the input program 164 of the control device 100.

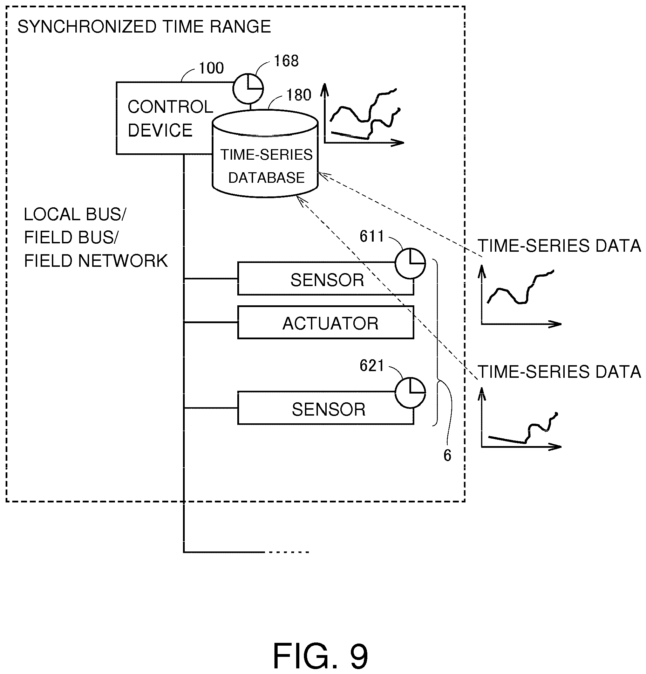

FIG. 9 is a diagram schematically illustrating a time-series data collecting process in the control device 100 according to the embodiment. Referring to FIG. 9, for example, the control device 100 including the time-series database 180 is connected to the field device group 6 via a local bus, a field bus, a field network, or the like. The time managing unit 168 of the control device 100 is synchronized with the time managing units 611 and 621 of the field device group 6.

The field device group 6 transmits a collected measured value and the like along with the time information which is managed by the time managing units 611 and 621 to the control device 100. When the time information and the measured value are received from the field device group 6, the control device 100 stores the time information as at least a part of an index (Key) and the measured value as a value (Value) in the time-series database 180.

In this way, the control device 100 may be connected to a field device which is synchronized therewith and the time information on the time at which data is collected from the field device may be added to data stored in the time-series database 180 of the control device 100. At this time, a key-value storage type record with time information as a key and with a value of corresponding data as a value may be stored in the time-series database 180.

It is possible to synchronize time-series data collected in the time-series database 180 with each other by adding the time information which is managed by the time managing unit 168 synchronized in time. That is, the time-series data can be compared or the like on a common time axis.

In this way, in the control device 100 according to the embodiment, it is possible to implement integration, accumulation, and interpretation of time-series data with high time accuracy in the control device 100 connected to one or more field device groups 6 by using the time information which is managed by the time managing unit 168 which is synchronized.

A plurality of control devices 100 can be synchronized with each other. In this case, by causing any control device 100, the support device 200, or the host system 400 to integrate the time-series data stored in the time-series databases 180 of the control devices 100, time-series data collected from the field device group 6 connected to another control device 100 can be subjected to collective interpretation or the like.

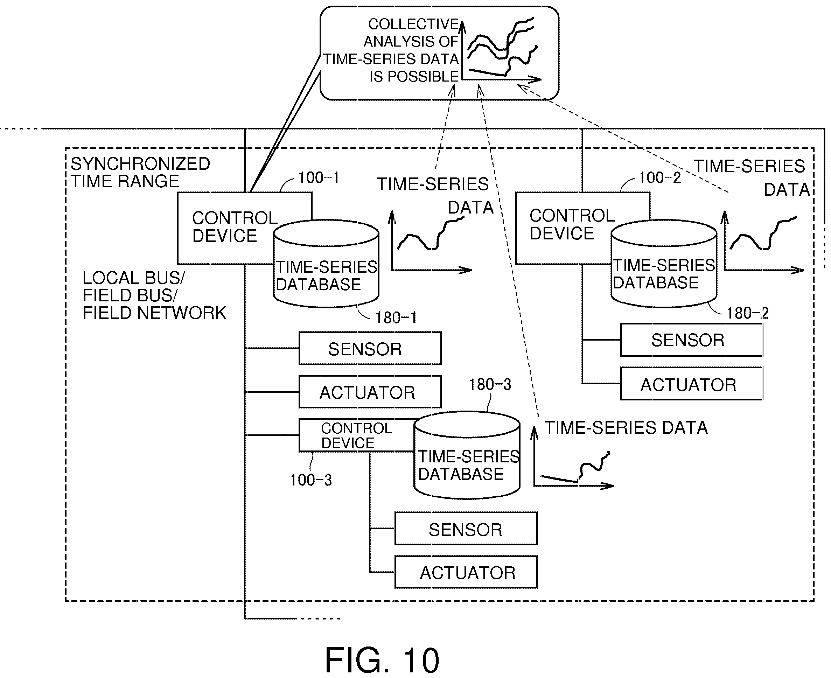

FIG. 10 is a diagram schematically illustrating a time-series data integrating process in the control device 100 according to the embodiment. The system illustrated in FIG. 10 includes control devices 100-1 to 100-3. The control devices 100-1 to 100-3 include time-series database 180-1 to 180-3, respectively. The control device 100-1 is connected to the control device 100-2 via a local bus, a field bus, a field network, or the like. The control device 100-1 is also connected to the control device 100-3 via a local bus, a field bus, a field network, or the like.

The control devices 100 which are connected to each other via a bus or a network are synchronized with each other and maintain a common time. By using the synchronized time information when registering time-series data in the time-series database 180, the time-series data stored in each of the time-series databases 180 can use a common time axis.

For example, the control device 100-1 can perform collective interpretation of time-series data by collecting the time-series data from the time-series database 180-2 of the control device 100-2 and the time-series database 180-3 of the control device 100-3 in addition to its own time-series database 180-1. In this way, a control device 100 may integrate data stored in the time-series databases 180 of each of the control devices 100 from one or more other control devices 100 connected thereto.

By implementing the above-mentioned data integrating function, a time axis can be commonly used by the time-series data collected by the control devices 100 even when a plurality of control devices 100 are provided in a distributed manner to satisfy required system specifications and the like. Accordingly, it is possible to facilitate post collective interpretation of the time-series data.

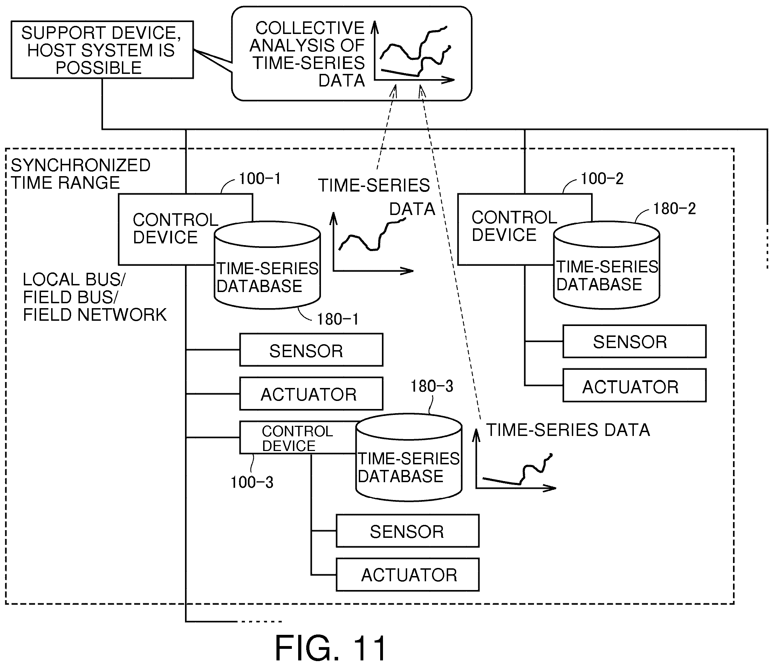

FIG. 11 is a diagram schematically illustrating a time-series data integrating process in an external device which is connected to the control device 100 according to the embodiment. As illustrated in FIG. 11, a control device 100 may be connected to another control device 100 including a time-series database 180 which is synchronized therewith, and an external device (the support device 200 or the host system 400) that integrates data stored in the time-series database 180 of the control device 100 and the time-series database 180 of the other control device 100 may be provided.

The support device 200 or the host system 400 can perform collective interpretation of time-series data by collecting the time-series data from the time-series databases 180. Accordingly, even when a plurality of control devices 100 are provided in a distributed manner to satisfy required system specifications and the like, a time axis can be commonly used by the time-series data collected by each of the control devices 100 and thus it is possible to facilitate post collective interpretation of the time-series data.

As described above, by connecting a plurality of control devices 100 via networks or the like synchronized with each other and collecting time-series data to which synchronized time stamps are given, it is possible to collectively interpret the time-series data later. By employing this configuration, it is possible to easily implement a configuration with scalability capable of extending the system depending on required performance, measured scores, or the like.

### H. Modified examples

### h1: Integration of hardware

In the control system 1 illustrated in FIG. 1, the control device 100, the support device 200, and the display device 300 are separately provided, but a configuration in which all or some of the functions are incorporated into a single device may be employed.

### h2: Data processing process

The process of processing time-series data which is written to the time-series database 180 may be performed in synchronization with the execution cycle of the user program 154 or may be performed asynchronously. When the processing process is performed in desynchronization with the user program 154, the processing process can be used as a pre-process before the time-series data is stored in the time-series database 180. In this way, by not synchronizing the processing process with the execution cycle of the user program 154, it is possible to reduce an influence of the time-series data collecting process on the control operation.

### h3: Simplification

In the above description, the control device 100 having a retrieval function from the time-series database 180 in addition to a data writing function to the time-series database 180 is exemplified, but the retrieval function may be omitted. That is, the data retrieval processing unit 186 may be omitted from the above-mentioned configuration of the control device 100.

By employing such a simplified configuration, the input process and the output process on the fly can be specialized for storage of time-series data in the time-series database. In this case, the control device 100 serves as a type of real-time data logger. The time-series data stored in the time-series database 180 may be read at an appropriate time and be subjected to an interpretation process or the like by the support device 200, the host system 400, or the like.

With the omission of the data retrieval processing unit 186, the database access arbitration processing unit 182 may also be omitted.

From the viewpoint of simplification of a device configuration, a time stamp recording function of giving a synchronous time to the time-series data may be omitted.

By employing such a simplified configuration, it is possible to implement collection of time-series data synchronized with a control cycle and to suppress an increase in cost or the like.

### 1. Conclusion

A general control device cyclically performs a series of processes of acquiring a measured value from a sensor, determining a command value by performing a control operation on the basis of the acquired measured value, and outputting the determined command value to various actuators. The cycle with which a series of processes are cyclically performed needs to be shortened to increase a processing rate. With this increase of the processing rate, it is possible to follow an observation object and a control object which change or fluctuate fast. It is possible to perform monitoring or control with higher accuracy. In order to realize the increase of a processing rate, it is necessary to repeatedly execute programs at a high speed with high stability using a processor.

There are requirements for complication and advancement of details of a control operation itself in addition to the increase of the processing rate. As described above, in order to perform an advanced control operation in parallel while cyclically performing an input process, a control operation process, and an output process in the related art, a processor and circuits associated with the processor are improved in functionality.

In such an advanced control operation, more information needs to be collected and used for various interpretations. In collecting more information, information for specifying an input time of an input data value is important.

With regard to such requirements, while maintaining high performance and high versatility of the control device according to the embodiment, by improving accuracy of time information which is given to time-series data which is stored, even a meter application which requires a dedicated device in the related art can be implemented using a general-purpose controller.

In addition to implementation of a meter application using a general-purpose controller, the control device according to the embodiment can facilitate assembly of a measuring function into a machine and give extensibility to a meter application. In this way, the control device according to the related art has a problem in that a function of accumulating and interpreting data along a time axis is not sufficient, but the control device according to the embodiment enables utilization of time-series data stored in the time-series database mounted therein and enables implementation of an arbitrary application using the time-series data such as a meter application.

There are requirements for new advancement of a control operation by collecting and utilizing a large amount of data from a field. Examples of such an advanced control operation include the following.
- Downtime of a facility or equipment is reduced by foreseeing a malfunction of a device and enabling treatment beforehand.
- Control with higher accuracy is realized by preparing a model in which a control object is more accurately reflected on the basis of a large amount of data from a field and feeding back response characteristics or the like based on the model to the control operation.

When a large amount of data is collected and accumulated and such a large amount of data is used in an application inside or outside a controller, an existing controller has insufficient functions. On the other hand, in the control device according to the embodiment, it is possible to minimize an influence on a control operation and to enable collection and accumulation of a large amount of data and use of the data in various applications. Accordingly, it is possible to provide a control device with higher functionality that can utilize a large amount of data from a field.

The control device according to the embodiment can perform a normal control operation and store time-series data acquired from a field in the time-series database mounted therein. An existing data logger is assumed to only collect data and is assumed to only extract and interpret the collected data later.

A general database is implemented using a server device or the like having a storage with a large capacity, and does not require resource management for realizing cyclic execution with a control cycle maintained like a controller taking charge of a control operation. On the other hand, the control device according to the embodiment have functions and processes required for collecting time-series data while realizing cyclic execution of an original control operation.

In a communication device or the like that collects data from a field and transmits the collected data to a higher server device or the like, a cycle with which data is collected from the field is relatively long (for example, order of seconds or minutes) and an amount of data which can be handled by each device is small. On the other hand, the control device according to the embodiment can collect data in a system cycle (order of milliseconds or microseconds) which is a cycle with which a control operation is repeatedly performed and can collect a larger amount of data.

The control device according to the embodiment includes a time-series database and can store time-series data in the time-series database in synchronization with an execution cycle of a control program in the control device. That is, an integrated controller in which a database is mounted and which is embodied by a PLC engine mounted as software is provided. By employing such a configuration, it is possible to obtain the following.
(1) Logging at a high speed without data leakage is possible in synchronization with a control operation.
(2) By employing a time-series database having a hierarchical structure of a storage, it is possible to optimize a speed and a capacity.
(3) A logging function which can extend to input and output processes on the fly can be provided.
(4) A flexible logging function (a programmable meter) that can define processing, interpretation, and storage of collected raw data in a user program.
(5) A time-series database (logging) which can be easily accessed by such as an AI engine or a statistical processing function can be provided.
(6) A time-series database having a ring function, a medium lifespan, and a function required for an assembled device of power supply interruption countermeasure can be provided.
(7) A time-series database in which time information synchronized between a plurality of control device and/or units is used as a time stamp can be provided. By employing such a time-series database, it is possible to facilitate collective use of a plurality of pieces of time-series data.
(8) A function capable of setting a quota of processing performance for each purpose of a database can be provided.

### [Reference Signs List]

1 Control system
2 First field bus
4 Second field bus
6 Field device group
8 Host-controller communication network
12 Remote I/O device
14 Relay group
16, 124, 124-1, 124-2 I/O unit
18 Image sensor
20 Camera
22 Servo driver
24 Servo motor
61 Output device
62 Input device
100, 100-1, 100-2, 100-3 Control device
102 Processor
104 Chip set
106 Primary storage device
108 Secondary storage device
110 Network controller
112 USB controller
114 Memory card interface
116 Memory card
118, 120 Field bus controller
122 Local bus controller
150 PLC engine
152 Control program
154 User program
156 Database writing program
158 Serialization communication program
160 System program
162 Scheduler program
164 Input program
166 Output program
168, 611, 621 Time managing unit
170 Input and output processing unit
172 Data writing request source
174 Data receiving destination
176 Buffer
180 Time-series database
182 Database access arbitration processing unit
184 Data storage processing unit
186 Data retrieval processing unit
188 Built-in storage
189 External storage
190, 210 Application
200 Support device
300 Display device
400 Host system
1541 Sequence operation
1542 Motion operation

## Claims

1. A control device (100, 100-1, 100-2, 100-3) comprising:
a processing unit (150) configured to cyclically perform a control operation with a predetermined execution cycle, wherein the control operation includes collection of input data from a field device (6), calculation of output data based on the input data in accordance with a predetermined user program (154), and output of the calculated output data, wherein the control device (100, 100-1, 100-2, 100-3) is a programmable logic controller;
**characterized by** a database (180, 180-1, 180-2, 180-3) disposed in a storage of the control device (100, 100-1, 100-2, 100-3) and configured to store designated data from data managed by the processing unit (150) in a time series, wherein the data managed by the processing unit (150) comprises values measured by the field device (6); and
a data writing means (170) configured to perform writing of the designated data to the database (180, 180-1, 180-2, 180-3) at the same cycle as the execution cycle with which the control operation is cyclically performed,
wherein the control operation which is cyclically performed by the processing unit (150) includes a process of issuing a data writing request to the database (180, 180-1, 180-2, 180-3),
wherein, in the control operation, when the data writing request is issued by the processing unit (150), a next process is continuously performed by the processing unit (150) without waiting for completion of the data writing.

2. The control device (100, 100-1, 100-2, 100-3) according to claim 1, wherein the data writing means (170) includes a buffer (176), and the buffer (176) is configured to receive the data writing request and to queue the data writing request.

3. The control device (100, 100-1, 100-2, 100-3) according to claim 2, further configured to construct a logical relationship between a data writing request source (172) and a data receiving destination (174) in the data writing means (170).

4. The control device according to any one of claims 1 to 3, wherein the data writing means (170) is configured to perform a process in the background in desynchronization with the control operation.

5. The control device (100, 100-1, 100-2, 100-3) according to any one of claims 1 to 4, wherein the control device (100, 100-1, 100-2, 100-3) is connectable to a field device (6) and configured to
synchronize with the field device (6), and
add time information on a time at which data is collected by the field device (6) to the data stored in the database (180, 180-1, 180-2, 180-3).

6. The control device (100, 100-1, 100-2, 100-3) according to claim 5, further configured to store a key-value storage type record with the time information as a key and a value of the corresponding data as a value in the database (180, 180-1, 180-2, 180-3).

7. The control device (100, 100-1, 100-2, 100-3) according to any one of claims 1 to 6, wherein the control device (100, 100-1, 100-2, 100-3) is further configured to integrate data which is stored in a database (180, 180-1, 180-2, 180-3) of each of one or more other control devices (100, 100-1, 100-2, 100-3) connected thereto.

8. The control device (100, 100-1, 100-2, 100-3) according to any one of claims 1 to 7, further comprising a retrieval processing unit (186) configured to process a retrieval request for data stored in the database (180, 180-1, 180-2, 180-3).

9. The control device (100, 100-1, 100-2, 100-3) according to claim 8, further comprising an arbitration processing unit (182) configured to arbitrate processing of the retrieval request such that the data writing to the database (180, 180-1, 180-2, 180-3) at the same cycle as the execution cycle is maintained.

10. A control system, comprising: the control device (100, 100-1, 100-2, 100-3) according to anyone of claims 1 to 9, an external device (200, 400) and another control device (100, 100-1, 100-2, 100-3) wherein the control device (100, 100-1, 100-2, 100-3) is connected to the other control device (100, 100-1, 100-2, 100-3) including a database (180, 180-1, 180-2, 180-3) which is synchronized therewith, and
wherein the external device (200, 400) is configured to integrate data stored in the database (180, 180-1, 180-2, 180-3) of the control device (100, 100-1, 100-2, 100-3) and the database (180, 180-1, 180-2, 180-3) of the other control device (100, 100-1, 100-2, 100-3).

11. A program executable on a control device (100, 100-1, 100-2, 100-3), the program causing a processing unit (150) contained in the control device (100, 100-1, 100-2, 100-3) to perform a step of cyclically performing a control operation with a predetermined execution cycle, wherein the control operation including collection of input data from a field device (6), calculation of output data based on the input data in accordance with a predetermined user program (154), and output of the calculated output data, wherein the control device (100, 100-1, 100-2, 100-3) is a programmable logic controller,
**characterized in that** the control device (180, 180-1, 180-2, 180-3) includes a database (180, 180-1, 180-2, 180-3) disposed in a storage of the control device (100, 100-1, 100-2, 100-3) and configured to store designated data from data managed by the control operation in a time series, wherein the data managed by the control operation comprises values measured by the field device (6), and
wherein the program causes the control device (180, 180-1, 180-2, 180-3) to further perform a step of performing writing of the designated data to the database (180, 180-1, 180-2, 180-3) at the same cycle as the execution cycle with which the control operation is cyclically performed,
wherein the control operation which is cyclically performed by the processing unit (150) includes a process of issuing a data writing request to the database (180, 180-1, 180-2, 180-3),
wherein, in the control operation, when the data writing request is issued by the processing unit (150), a next process is continuously performed by the processing unit (150) without waiting for completion of the data writing.

## Patentansprüche

1. Steuervorrichtung (100, 100-1, 100-2, 100-3), umfassend:
eine Verarbeitungseinheit (150), die konfiguriert ist, um einen Steuervorgang mit einem vorbestimmten Ausführungszyklus zyklisch durchzuführen, wobei der Steuervorgang das Sammeln von Eingangsdaten von einer Feldvorrichtung (6), das Berechnen von Ausgangsdaten basierend auf den Eingangsdaten gemäß einem vorbestimmten Benutzerprogramm (154) und das Ausgeben der berechneten Ausgangsdaten beinhaltet, wobei die Steuervorrichtung (100, 100-1, 100-2, 100-3) eine speicherprogrammierbare Steuerung ist;
**gekennzeichnet durch** eine Datenbank (180, 180-1, 180-2, 180-3), die in einem Speicher der Steuervorrichtung (100, 100-1, 100-2, 100-3) angeordnet und konfiguriert ist, um designierte Daten aus Daten zu speichern, die von der Verarbeitungseinheit (150) in einer Zeitreihe verwaltet werden, wobei die von der Verarbeitungseinheit (150) verwalteten Daten Werte umfassen, die von der Feldvorrichtung (6) gemessen werden; und
ein Datenschreibmittel (170), das konfiguriert ist, um das Schreiben der designierten Daten in die Datenbank (180, 180-1, 180-2, 180-3) im gleichen Zyklus wie der Ausführungszyklus durchzuführen, mit dem der Steuervorgang zyklisch ausgeführt wird,
wobei der Steuervorgang, der zyklisch von der Verarbeitungseinheit (150) durchgeführt wird, einen Prozess zum Ausgeben einer Datenschreibanforderung an die Datenbank (180, 180-1, 180-2, 180-2, 180-3) beinhaltet,
wobei im Steuervorgang, wenn die Datenschreibanforderung von der Verarbeitungseinheit (150) ausgegeben wird, ein nächster Prozess kontinuierlich von der Verarbeitungseinheit (150) durchgeführt wird, ohne auf den Abschluss des Datenschreibens zu warten.

2. Steuervorrichtung (100, 100-1, 100-2, 100-3) nach Anspruch 1, wobei die Datenschreibvorrichtung (170) einen Puffer (176) beinhaltet, und der Puffer (176) konfiguriert ist, um die Datenschreibanforderung zu empfangen und die Datenschreibanforderung in eine Warteschlange zu stellen.

3. Steuervorrichtung (100, 100-1, 100-2, 100-3) nach Anspruch 2, die ferner konfiguriert ist, um eine logische Beziehung zwischen einer Datenschreibanforderungsquelle (172) und einem Datenempfangsziel (174) in den Datenschreibmitteln (170) aufzubauen.

4. Steuervorrichtung nach einem der Ansprüche 1 bis 3, wobei die Datenschreibvorrichtung (170) konfiguriert ist, um einen Prozess im Hintergrund in Desynchronisation mit dem Steuervorgang durchzuführen.

5. Die Steuervorrichtung (100, 100-1, 100-2, 100-3) nach einem der Ansprüche 1 bis 4, wobei die Steuervorrichtung (100, 100-1, 100-2, 100-3) mit einer Feldvorrichtung (6) verbindbar und konfiguriert ist um
mit der Feldvorrichtung (6) zu synchronisieren und
Zeitinformationen zu einem Zeitpunkt, zu dem Daten von der Feldvorrichtung (6) gesammelt werden, zu den in der Datenbank gespeicherten Daten (180, 180-1, 180-2, 180-3) hinzuzufügen.

6. Steuervorrichtung (100, 100-1, 100-2, 100-3) nach Anspruch 5, ferner konfiguriert, um einen Schlüsselwertspeichertypsatz mit der Zeitinformation als Schlüssel und einem Wert der entsprechenden Daten als Wert in der Datenbank (180, 180-1, 180-2, 180-3) zu speichern.

7. Steuervorrichtung (100, 100-1, 100-2, 100-3) nach einem der Ansprüche 1 bis 6, wobei die Steuervorrichtung (100, 100-1, 100-2, 100-3) ferner konfiguriert ist, um Daten zu integrieren, die in einer Datenbank (180, 180-1, 180-2, 180-3) einer jeden oder mehrerer anderer Steuervorrichtungen (100, 100-1, 100-2, 100-3) gespeichert sind, die damit verbunden sind.

8. Steuervorrichtung (100, 100-1, 100-2, 100-3) nach einem der Ansprüche 1 bis 7, ferner umfassend eine Abrufverarbeitungseinheit (186), die konfiguriert ist, um eine Abrufanforderung für in der Datenbank (180, 180-1, 180-2, 180-3) gespeicherte Daten zu verarbeiten.

9. Steuervorrichtung (100, 100-1, 100-2, 100-3) nach Anspruch 8, die ferner eine Arbitrierungsverarbeitungseinheit (182) umfasst, die konfiguriert ist, um die Verarbeitung der Abrufanforderung so zu vermitteln, dass das Schreiben der Daten in die Datenbank (180, 180-1, 180-2, 180-3) im gleichen Zyklus wie der Ausführungszyklus erhalten bleibt.

10. Steuersystem, umfassend: die Steuervorrichtung (100, 100-1, 100-2, 100-3) nach einem der Ansprüche 1 bis 9, eine externe Vorrichtung (200, 400) und eine weitere Steuervorrichtung (100, 100-1, 100-2, 100-3), wobei die Steuervorrichtung (100, 100-1, 100-2, 100-3) mit der weiteren Steuervorrichtung (100, 100-1, 100-2, 100-2, 100-3) verbunden ist, die eine Datenbank (180, 180-1, 180-2, 180-3) beinhaltet, die damit synchronisiert ist, und
wobei die externe Vorrichtung (200, 400) konfiguriert ist, um in der Datenbank (180, 180-1, 180-2, 180-3) der Steuervorrichtung (100, 100-1, 100-2, 100-3) gespeicherte Daten und die Datenbank (180, 180-1, 180-2, 180-2, 180-3) der anderen Steuervorrichtung (100, 100-1, 100-2, 100-3) zu integrieren.

11. Programm, das auf einer Steuervorrichtung (100, 100-1, 100-2, 100-3) ausführbar ist, wobei das Programm eine in der Steuervorrichtung (100, 100-1, 100-2, 100-3) enthaltene Verarbeitungseinheit (150) veranlasst, einen Schritt zum zyklischen Durchführen eines Steuervorgangs mit einem vorbestimmten Ausführungszyklus durchzuführen, wobei der Steuervorgang das Sammeln von Eingangsdaten von einer Feldvorrichtung (6), das Berechnen von Ausgangsdaten basierend auf den Eingangsdaten gemäß einem vorbestimmten Benutzerprogramm (154) und das Ausgeben der berechneten Ausgangsdaten beinhaltet, wobei die Steuervorrichtung (100, 100-1, 100-2, 100-3) eine speicherprogrammierbare Steuerung ist,
**dadurch gekennzeichnet, dass** die Steuervorrichtung (180, 180-1, 180-2, 180-3) eine Datenbank (180, 180-1, 180-2, 180-3) beinhaltet, die in einem Speicher der Steuervorrichtung (100, 100-1, 100-2, 100-3) angeordnet und konfiguriert ist, um designierte Daten aus Daten zu speichern, die durch den Steuervorgang in einer Zeitreihe verwaltet werden, wobei die durch den Steuervorgang verwalteten Daten Werte umfassen, die von der Feldvorrichtung (6) gemessen werden, und
wobei das Programm bewirkt, dass die Steuervorrichtung (180, 180-1, 180-2, 180-3) weiterhin einen Schritt des Schreibens der designierten Daten in die Datenbank (180, 180-1, 180-2, 180-3) im gleichen Zyklus wie der Ausführungszyklus durchführt, mit dem der Steuervorgang zyklisch ausgeführt wird,
wobei der Steuervorgang, der zyklisch von der Verarbeitungseinheit (150) durchgeführt wird, einen Prozess zum Ausgeben einer Datenschreibanforderung an die Datenbank (180, 180-1, 180-2, 180-2, 180-3) beinhaltet,
wobei im Steuervorgang, wenn die Datenschreibanforderung von der Verarbeitungseinheit (150) ausgegeben wird, ein nächster Prozess kontinuierlich von der Verarbeitungseinheit (150) durchgeführt wird, ohne auf den Abschluss des Datenschreibens zu warten.

## Revendications

1. Dispositif de commande (100, 100-1, 100-2, 100-3) comprenant :
une unité de traitement (150) configurée pour effectuer de manière cyclique une opération de commande avec un cycle d'exécution prédéterminé, l'opération de commande comprenant la collecte de données d'entrée à partir d'un dispositif de terrain (6), le calcul de données de sortie sur la base des données d'entrée conformément à un programme d'utilisateur prédéterminé (154), et la délivrance des données de sortie calculées, le dispositif de commande (100, 100-1, 100-2, 100-3) étant un contrôleur logique programmable ;
**caractérisé par** une base de données (180, 180-1, 180-2, 180-3) disposée dans un dispositif de stockage du dispositif de commande (100, 100-1, 100-2, 100-3) et configurée pour stocker des données désignées à partir de données gérées par l'unité de traitement (150) dans une série chronologique, les données gérées par l'unité de traitement (150) comprenant des valeurs mesurées par le dispositif de terrain (6) ; et
un moyen d'écriture de données (170) configuré pour effectuer l'écriture des données désignées dans la base de données (180, 180-1, 180-2, 180-3) au même cycle que le cycle d'exécution auquel l'opération de commande est effectuée de manière cyclique,
dans lequel l'opération de commande qui est effectuée de manière cyclique par l'unité de traitement (150) comprend un processus de délivrance d'une demande d'écriture de données à la base de données (180, 180-1, 180-2, 180-3),
dans lequel, dans l'opération de commande, lorsque la demande d'écriture de données est délivrée par l'unité de traitement (150), un processus suivant est effectué de manière continue par l'unité de traitement (150) sans attendre l'achèvement de l'écriture de données.

2. Dispositif de commande (100, 100-1, 100-2, 100-3) selon la revendication 1, dans lequel le moyen d'écriture de données (170) comprend une mémoire tampon (176), et la mémoire tampon (176) est configurée pour recevoir la demande d'écriture de données et pour mettre en file d'attente la demande d'écriture de données.

3. Dispositif de commande (100, 100-1, 100-2, 100-3) selon la revendication 2, configuré en outre pour construire une relation logique entre une source de demande d'écriture de données (172) et une destination de réception de données (174) dans le moyen d'écriture de données (170).

4. Dispositif de commande selon l'une quelconque des revendications 1 à 3, dans lequel le moyen d'écriture de données (170) est configuré pour effectuer un processus en arrière-plan en désynchronisation avec l'opération de commande.

5. Dispositif de commande (100, 100-1, 100-2, 100-3) selon l'une quelconque des revendications 1 à 4, dans lequel le dispositif de commande (100, 100-1, 100-2, 100-3) peut être connecté à un dispositif de terrain (6) et configuré pour
se synchroniser avec le dispositif de terrain (6), et
ajouter des informations temporelles sur un temps auquel des données sont collectées par le dispositif de terrain (6) aux données stockées dans la base de données (180, 180-1, 180-2, 180-3).

6. Dispositif de commande (100, 100-1, 100-2, 100-3) selon la revendication 5, configuré en outre pour stocker un enregistrement de type de stockage de valeur de clé avec les informations temporelles en tant que clé et une valeur des données correspondantes en tant que valeur dans la base de données (180, 180-1, 180-2, 180-3).

7. Dispositif de commande (100, 100-1, 100-2, 100-3) selon l'une quelconque des revendications 1 à 6, dans lequel le dispositif de commande (100, 100-1, 100-2, 100-3) est configuré en outre pour intégrer des données qui sont stockées dans une base de données (180, 180-1, 180-2, 180-3) de chacun d'un ou plusieurs autres dispositifs de commande (100, 100-1, 100-2, 100-3) connectés à celui-ci.

8. Dispositif de commande (100, 100-1, 100-2, 100-3) selon l'une quelconque des revendications 1 à 7, comprenant en outre une unité de traitement de récupération (186) configurée pour traiter une demande de récupération pour des données stockées dans la base de données (180, 180-1, 180-2, 180-3).

9. Dispositif de commande (100, 100-1, 100-2, 100-3) selon la revendication 8, comprenant en outre une unité de traitement d'arbitrage (182) configurée pour arbitrer un traitement de la demande de récupération de telle sorte que l'écriture de données dans la base de données (180, 180-1, 180-2, 180-3) au même cycle que le cycle d'exécution est maintenue.

10. Système de commande, comprenant : le dispositif de commande (100, 100-1, 100-2, 100-3) selon l'une quelconque des revendications 1 à 9, un dispositif externe (200, 400) et un autre dispositif de commande (100, 100-1, 100-2, 100-3), dans lequel le dispositif de commande (100, 100-1, 100-2, 100-3) est connecté à l'autre dispositif de commande (100, 100-1, 100-2, 100-3) comprenant une base de données (180, 180-1, 180-2, 180-3) qui est synchronisée avec celui-ci, et
dans lequel le dispositif externe (200, 400) est configuré pour intégrer des données stockées dans la base de données (180, 180-1, 180-2, 180-3) du dispositif de commande (100, 100-1, 100-2, 100-3) et la base de données (180, 180-1, 180-2, 180-3) de l'autre dispositif de commande (100, 100-1, 100-2, 100-3).

11. Programme exécutable sur un dispositif de commande (100, 100-1, 100-2, 100-3), le programme amenant une unité de traitement (150) contenue dans le dispositif de commande (100, 100-1, 100-2, 100-3) à effectuer une étape d'exécution de manière cyclique d'une opération de commande avec un cycle d'exécution prédéterminé, dans lequel l'opération de commande comprend la collecte de données d'entrée à partir d'un dispositif de terrain (6), le calcul de données de sortie sur la base des données d'entrée conformément à un programme d'utilisateur prédéterminé (154), et la délivrance des données de sortie calculées, dans lequel le dispositif de commande (100, 100-1, 100-2, 100-3) est un contrôleur logique programmable,
**caractérisé par le fait que** le dispositif de commande (180, 180-1, 180-2, 180-3) comprend une base de données (180, 180-1, 180-2, 180-3) disposée dans un dispositif de stockage du dispositif de commande (100, 100-1, 100-2, 100-3) et configurée pour stocker des données désignées à partir de données gérées par l'opération de commande dans une série chronologique, les données gérées par l'opération de commande comprenant des valeurs mesurées par le dispositif de terrain (6), et
dans lequel le programme amène le dispositif de commande (180, 180-1, 180-2, 180-3) à effectuer en outre une étape de réalisation d'écriture des données désignées dans la base de données (180, 180-1, 180-2, 180-3) au même cycle que le cycle d'exécution auquel l'opération de commande est effectuée de manière cyclique,
dans lequel l'opération de commande qui est effectuée de manière cyclique par l'unité de traitement (150) comprend un processus de délivrance d'une demande d'écriture de données à la base de données (180, 180-1, 180-2, 180-3),
dans lequel, dans l'opération de commande, lorsque la demande d'écriture de données est délivrée par l'unité de traitement (150), un processus suivant est effectué de manière continue par l'unité de traitement (150) sans attendre l'achèvement de l'écriture de données.
